# EUROPEAN PATENT APPLICATION

(11) **EP 4 838 866 A1**
(43) Date of publication of application: **11.11.2026**
(21) Application number: 25755241.4
(22) Date of filing: 13.02.2025
(51) Int. Cl.: H04L 67/101, H04L 61/4511, H04L 43/0852, H04L 43/062, H04W 76/32, H04W 76/12, H04L 45/121, H04L 45/302, H04W 88/14

(54) **METHOD AND APPARATUS FOR EDGE SERVICE RESOURCE SELECTION IN WIRELESS COMMUNICATION SYSTEM**

(30) Priority: 16.02.2024 KR 20240022491; 17.04.2024 KR 20240051373
(71) Applicant: Samsung Electronics Co., Ltd., Suwon-si, Gyeonggi-do 16677 (KR)
(72) Inventor: BAE, Jaehyeon, Suwon-si, Gyeonggi-do 16677 (KR); KIM, Hyesung, Suwon-si, Gyeonggi-do 16677 (KR); LEE, Jicheol, Suwon-si, Gyeonggi-do 16677 (KR); LEE, Hoyeon, Suwon-si, Gyeonggi-do 16677 (KR)
(74) Representative: Gulde & Partner
(86) International application number: PCT/KR2025/002146
(87) International publication number: WO 2025/174092

(57) **Abstract**

The present disclosure relates to a 5G or 6G communication system for supporting higher data transmission rates. The present disclosure proposes a method and an apparatus for resource selection by a terminal and a base station in a wireless communication system.

## Description

### [Technical Field]

The disclosure relates to operations of a terminal and a base station in a wireless communication system. More specifically, the disclosure relates to a method and an apparatus for (re)selection of a protocol data unit (PDU) session anchor-user plane function (PSA-UPF) and an edge application server (EAS) in a wireless communication system.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond the 5G system) in terahertz bands (for example, 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure]

### [Technical Problem]

Embodiments set forth herein are to provide an apparatus and a method capable of effectively providing services in a mobile communication system.

The disclosure provides a method and an apparatus for (re)selection of a protocol data unit (PDU) session anchor-user plane function (PSA-UPF) and an edge application server (EAS) in a wireless communication system.

The technical subjects pursued in the disclosure are not limited to the above-mentioned technical subjects, and other technical subjects which are not mentioned herein may be considered from the following description by those skilled in the art to which the disclosure pertains.

### [Technical Solution]

According to an embodiment of the disclosure, a method for operating a network node is provided. The method for operating a network node may include at least one of the following processes. In order to support (re)selection operations of a PSA-UPF and an EAS, a session management function (SMF) may receive application (re)selection delay time requirement information from an application function (AF). The information may include a target data network access identifier (DNAI) identifier (hereinafter, ID), N6 delay requirements and user plane delay requirements required in case of (re)selecting an application by target DNAI, and the like. The SMF may determine whether to perform application (re)selection, based on the information. In case of determining to perform application (re)selection, the SMF may transmit a request message regarding protocol data unit (PDU) session anchor-user plane function (PSA-UPF) and EAS-related delay time measurement to a network data analytics function (NWDAF) node.

An embodiment of the disclosure provides a method performed by a session management function (SMF) entity in a communication system, the method including: receiving, from a policy control function (PCF) entity, a notify message including a policy and charging control (PCC) rule for measurement regarding N6 delay, the measurement regarding the N6 delay being measurement regarding a connection between at least one user plane function (UPF) entity and a measurement endpoint of a data network (DN);
receiving, from an application function (AF) entity, edge application server (EAS) deployment information (EDI) for the measurement regarding the N6 delay; and transmitting a request message for the measurement regarding the N6 delay to the at least one UPF entity.

An embodiment of the disclosure provides a method performed by a user plane function (UPF) entity in a communication system, the method including: receiving a request message for measurement regarding N6 delay from a session management function (SMF) entity, the measurement regarding the N6 delay being measurement regarding a connection between at least one UPF entity and a measurement endpoint of a data network (DN); performing the measurement regarding the N6 delay, based on the request message; and transmitting, to the SMF entity, a reporting message including a result regarding the measurement regarding the N6 delay, in response to the request message, wherein the measurement regarding the N6 delay is related to a notify message including a policy and charging control (PCC) rule received from a policy control function (PCF) entity and edge application server (EAS) deployment information (EDI) received from an application function (AF) entity.

An embodiment of the disclosure provides a session management function (SMF) entity in a communication system, the SMF entity including: a transceiver; and a controller coupled to the transceiver, wherein the controller is configured to: receive, from a policy control function (PCF) entity, a notify message including a policy and charging control (PCC) rule for measurement regarding N6 delay, the measurement regarding the N6 delay being measurement regarding a connection between at least one user plane function (UPF) entity and a measurement endpoint of a data network (DN); receive, from an application function (AF) entity, edge application server (EAS) deployment information (EDI) for the measurement regarding the N6 delay; and transmit a request message for the measurement regarding the N6 delay to the at least one UPF entity.

An embodiment of the disclosure provides a user plane function (UPF) entity in a communication system, the UPF entity including: a transceiver; and a controller coupled to the transceiver, wherein the controller is configured to:
receive a request message for measurement regarding N6 delay from a session management function (SMF) entity, the measurement regarding the N6 delay being measurement regarding a connection between at least one UPF entity and a measurement endpoint of a data network (DN); perform the measurement regarding the N6 delay, based on the request message; and transmit, to the SMF entity, a reporting message including a result regarding the measurement regarding the N6 delay, in response to the request message, wherein the measurement regarding the N6 delay is related to a notify message including a policy and charging control (PCC) rule received from a policy control function (PCF) entity and edge application server (EAS) deployment information (EDI) received from an application function (AF) entity.

Base on the discussion described above, a method for processing a control signal in a wireless communication system according to the disclosure may include receiving a first control signal transmitted from a base station, processing the received first control signal, and transmitting, to the base station, a second control signal generated based on the processing.

### [Advantageous Effects]

Embodiments set forth herein provide an apparatus and a method capable of effectively providing services in a mobile communication system. Specifically, the disclosure provides a method and an apparatus for (re)selection of a protocol data unit (PDU) session anchor-user plane function (PSA-UPF) and an edge application server (EAS) in a wireless communication system.

Advantageous effects obtainable from the disclosure are not limited to the above-mentioned advantageous effects, and other advantageous effects not mentioned herein will be clearly understood by those skilled in the art from the following description.

### [Description of Drawings]

FIG. 1 illustrates a network architecture and interfaces of a 5G system according to an embodiment of the disclosure.
FIG. 2 is a diagram illustrating an AF traffic influence request procedure including a data path delay information request according to an embodiment of the disclosure.
FIG. 3A is a diagram illustrating a procedure for requesting N6 delay analysis information using a NWDAF according to an embodiment of the disclosure.
FIG. 3BA is a diagram illustrating a procedure in which an AF according to an embodiment of the disclosure determines to perform a PSA-UPF (re)selection or EAS (re)selection operation in consideration of N6 delay, and measures and reports N6 delay through a UPF.
FIG. 3BB is a diagram illustrating a procedure in which an AF according to an embodiment of the disclosure determines to perform a PSA-UPF (re)selection or EAS (re)selection operation in consideration of N6 delay, and measures and reports N6 delay through a UPF.
FIG. 3BC is a diagram illustrating a procedure in which an AF according to an embodiment of the disclosure determines to perform a PSA-UPF (re)selection or EAS (re)selection operation in consideration of N6 delay, and measures and reports N6 delay through a UPF.
FIG. 4 is a diagram illustrating a PSA-UPF (re)selection determination procedure in consideration of data path delay according to an embodiment of the disclosure.
FIG. 5 is a diagram illustrating an AF traffic influence request procedure including a data path delay information request according to an embodiment of the disclosure.
FIG. 6 is a diagram illustrating a procedure of requesting N6 delay analysis information using a NWDAF according to an embodiment of the disclosure.
FIG. 7A is a diagram illustrating an EAS (re)selection determination procedure in consideration of data path delay according to an embodiment of the disclosure.
FIG. 7B is a diagram illustrating an EAS (re)selection determination procedure in consideration of data path delay according to an embodiment of the disclosure.
FIG. 8 illustrates a structure of a UE according to an embodiment of the disclosure.
FIG. 9 illustrates a network entity according to an embodiment of the disclosure.

### [Mode for Invention]

Hereinafter, an embodiment of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea. Also, the terms which will be described below are terms defined in consideration of the functions in the disclosure, and may be different according to users, intentions of the users, or customs. Accordingly, the definitions thereof should be made based on the contents throughout the specification.

In describing the disclosure below, a detailed description of known functions or configurations will be omitted when it is determined that the description may make the subject matter of the disclosure unnecessarily unclear. Hereinafter, embodiments of the disclosure will be described with reference to the accompanying drawings.

Hereinafter, the operation principle of the disclosure will be described in detail with reference to the accompanying drawings. The terms which will be described below are terms defined in consideration of the functions in the disclosure. These terms may be different according to users, intentions of the users, or customs, and their definitions should be made based on the contents throughout the specification.

In describing the embodiments of the disclosure, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

In the following description, a base station (hereinafter "BS") is an entity that allocates resources to terminals, and may be at least one of a gNode B, an eNode B, a Node B (or xNode B (where, x is an alphabet including g and e)), a wireless access unit, a base station controller, a satellite, an airborne, and a node on a network. A user equipment (hereinafter "UE") may include a mobile station (MS), a vehicular, a satellite, an airborne, a cellular phone, a smartphone, a computer, or a multimedia system capable of performing communication functions. As used herein, a "downlink (DL)" refers to a radio link via which a base station transmits a signal to a terminal, and an "uplink (UL)" refers to a radio link via which a terminal transmits a signal to a base station. Additionally, a "sidelink (SL)" may exist, which refers to a radio link via which a UE transmits a signal to another UE.

Furthermore, in the following description, LTE, LTE-A, or 5G systems may be described by way of example, but the embodiments of the disclosure may also be applied to other communication systems having similar technical backgrounds or channel types. Examples thereof may include 5G-Advance, NR-Advance, or 6th generation (6G) mobile communication technologies developed beyond 5G mobile communication technologies (or new radio (NR)), and in the following description, the "5G" may be the concept that covers the exiting LTE, LTE-A, or other similar services. Moreover, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description, terms for identifying access nodes, terms referring to network entities or network functions (NFs), terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, some of terms and names defined in the 3rd generation partnership project (3GPP) long term evolution (LTE) standards and/or 3GPP new radio (NR) standards may be used for the sake of descriptive convenience. However, the disclosure is not limited by these terms and names, and may be applied in the same way to systems that conform other standards.

Specific terms used in the following description are provided to help understanding the disclosure, and the use of such specific terms may be changed into other forms without departing from the technical spirit of the disclosure.

The 3GPP, which is responsible for cellular mobile communication standardization, has introduced a new core network structure named 5G core (5GC) and is pursuing the standardization in order to push evolution from a 4G LTE system to a 5G system. 5GC supports the following distinguishable functions as compared to an evolved packet core (hereinafter "EPC") that is a network core for 4G.

In 5GC, a network slicing function is introduced. As requirements for 5G, 5GC needs to support various terminal types and services (e.g., enhanced mobile broadband (hereinafter "eMBB"), ultra reliable low latency communications (hereinafter "URLLC"), and massive machine type communications (hereinafter "mMTC")). Such terminals/services each have different requirements for a core network. For example, the eMBB service may require a high data rate, and the URLLC service may require high stability and low latency. A network slicing technology has been proposed to satisfy these various service requirements.

Network slicing may refer to a method of virtualizing one physical network into several logical networks (e.g., network slices). Activated network slices may be referred to as network slice instances, and each network slice instance (hereinafter "NSI") may have a different characteristic. A mobile communication service provider may configure, for each NSI, a network function (hereinafter "NF") suitable for the characteristic of the NSI so as to satisfy various service requirements according to terminals/services. For example, the mobile communication service provider may assign an NSI suitable for the characteristic of a service required by each terminal, so as to efficiently support various 5G services (e.g., eMBB, URLLC, or mMTC).

5GC may easily support a network virtualization paradigm by separating a mobility management function and a session management function. In 4G LTE, all terminals may be provided with services from a network through signaling exchange with a single core entity called a mobility management entity (MME), which is responsible for registration, authentication, and mobility management and session management functions. In 5G, as the number of terminals (for example, including MTC terminals) has explosively increased and mobility and traffic/session characteristics to be supported have been subdivided according to terminal types, scalability for adding entities according to required functions is inevitably reduced if a single entity (e.g., MME) supports all the functions. Therefore, in order to improve scalability in terms of signaling loads and the function/implementation complexity of a core entity responsible for a control plane, various functions are being developed based on a structure of separating a mobility management function and a session management function.

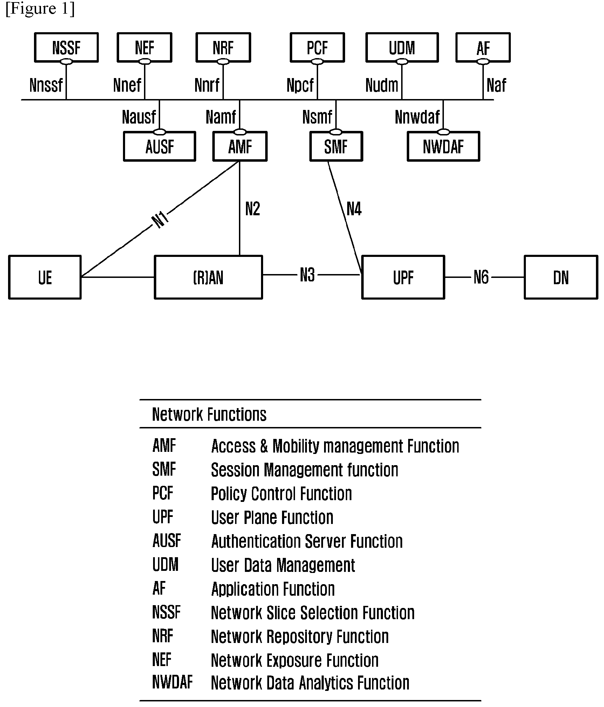

FIG. 1 illustrates a network architecture and interfaces of a 5G system according to an embodiment of the disclosure.

Network entities included in the network architecture of the 5G system in FIG. 1 may include network functions (NFs) according to system implementations.

Referring to FIG. 1, the network architecture of the 5G system may include various network entities. For example, the 5G system may include at least one of an authentication server function (hereinafter "AUSF") entity, a (core) access and mobility management function (hereinafter "AMF") entity, a session management function (hereinafter "SMF") entity, a policy control function (hereinafter "PCF") entity, an application function (hereinafter "AF") entity, a unified data management (hereinafter "UDM") entity, a data network (hereinafter "DN"), a network exposure function (hereinafter "NEF:) entity, a network slicing selection function (hereinafter "NSSF"), a user plane function (UPF) entity, a (radio) access network (hereinafter "(R)AN"), or a terminal (e.g., a user equipment (UE) or terminal).

The respective NFs in the 5G system may support the following functions.

The AUSF may process and store data for authentication of the UE.

The AMF may provide a function for access and mobility management on a per-UE basis, and basically, one UE may be connected to one AMF. Specifically, the AMF may support functions, such as inter-core network (CN) node signaling for mobility between 3GPP access networks, termination of a radio access network (hereinafter "RAN") CP interface (e.g., N2 interface), termination of NAS signaling (N1), NAS signaling security (NAS ciphering and integrity protection), AS security control, registration management (registration area management), connection management, idle mode UE reachability (e.g., which may include control and execution of paging retransmission), mobility management control (e.g., subscription and policy), support for intra-system mobility and inter-system mobility, support for network slicing, SMF selection, lawful intercept (e.g., for an AMF event and an interface to an LI system), delivery of a session management (hereinafter "SM") message between the UE and the SMF, a transparent proxy for routing an SM message, access authentication, access authorization including roaming permission checking, delivery of an SMS message between the UE and a short message service function (SMSF), a security anchor function (hereinafter "SAF"), and/or security context management (hereinafter "SCM"). Some or all of the functions of the AMF entity may be supported within a single instance of one AMF entity.

The DN may refer to, for example, an operator service, Internet access, a 3rd-party service, or the like. The DN may transmit a downlink protocol data unit (hereinafter "PDU") to the UPF entity, or receive, from the UPF entity, a PDU transmitted by the UE.

The PCF entity may provide a function of receiving information on a packet flow from an application server to determine policies, such as mobility management and session management. Specifically, the PCF entity may support functions, such as supporting a unified policy framework for controlling network operations, providing policy rules so as to allow control plane function(s) (e.g., AMF entity, SMF entity, etc.) to enforce the policy rules, and implementing a front end for accessing relevant subscription information for policy decisions in a user data repository (hereinafter "UDR").

The SMF entity may provide a session management function, and if the UE has multiple sessions, each session may be managed by a different SMF entity. Specifically, the SMF entity may support functions, such as session management (e.g., session establishment, modification, and release including maintenance of a tunnel between the UPF and an (R)AN node), UE IP address assignment and management (e.g., including selective authentication), selection and control of a UP function, configuration of traffic steering for routing traffic to an appropriate destination from the UPF entity, termination of an interface toward policy control functions, execution of a control part of a quality of service (QoS) and a policy, lawful interception (e.g., for an SM event and an interface to an LI system), termination of an SM part of an NAS message, downlink data notification, an initiator of AN-specific SM information (e.g., delivered to the (R)AN 102 through N2 via the AMF), determination of a session and service continuity (SSC) mode of a session, and a roaming function. Some or all of the functions of the SMF entity may be supported within a single instance of one SMF entity.

The UDM entity may store a user's subscription data, policy data, and the like. The UDM entity 109 may include at least one of two parts, that is, an application front end (hereinafter "FE") and a user data repository (hereinafter "UDR").

The FE may include a UDM FE responsible for location management, subscription management, credential processing, etc., and a PCF entity responsible for policy control. The UDR may store data required for functions provided by the UDM-FE and a policy profile required by the PCF. The data stored in the UDR may include policy data, and user subscription data including subscription identifiers, security credentials, access- and mobility-related subscription data, and session-related subscription data. The UDM-FE may support functions, such as access to subscription information stored in the UDR, authentication credential processing, user identification handling, access authentication, registration/mobility management, subscription management, and SMS management.

The UPF entity may deliver downlink PDUs, received from the DN, to the UE 101 via the (R)AN, and may deliver uplink PDUs, received from the UE 101, to the DN 110 via the (R)AN. Specifically, the UPF entity may support functions, such as an anchor point for intra-/inter-RAT mobility, an external PDU session point for interconnection to a data network, packet routing and forwarding, a user plane part of packet inspection and policy rule enforcement, lawful intercept, and traffic usage reporting, an uplink classifier for supporting routing of traffic flows to the data network, a branching point for supporting multi-homed PDU sessions, QoS handling (e.g., packet filtering, gating, and uplink/downlink rate enforcement) for a user plane, uplink traffic verification (e.g., SDF mapping between a service data flow (SDF) and a QoS flow), transport-level packet marking within an uplink and downlink, downlink packet buffering, and downlink data notification triggering. Some or all of the functions of the UPF entity may be supported within a single instance of one UPF.

The AF entity may interwork with a 3GPP core network in order to provide services (e.g., supporting functions, such as an application influence on traffic routing, access to network capability exposure, and interworking with a policy framework for policy control).

The (R)AN may generally refer to new radio access networks that support both evolved E-UTRA, which is an evolved version of 4G radio access technology, and new radio (NR) technology (e.g., gNB).

The gNB may support functions, such as radio resource management functions (e.g., radio bearer control, radio admission control, connection mobility control, dynamic allocation of resources to UEs in an uplink/downlink (i.e., scheduling)), Internet protocol (IP) header compression, encryption and integrity protection of user data streams, selection of the AMF during attachment of the UE in a case where routing to the AMF is not determined from information provided to the UE, routing of user plane data to the UPF(s), routing of control plane information to the AMF, connection setup and release, scheduling and transmission of paging messages (e.g., originating from the AMF), scheduling and transmission of system broadcast information (e.g., originating from the AMF or operating and maintenance (O&M), measurement and measurement reporting configuration for mobility and scheduling, transport level packet marking in an uplink, session management, support for network slicing, QoS flow management and mapping to data radio bearers, support for UEs in an inactive mode, NAS message distribution functions, NAS node selection functions, radio access network sharing, dual connectivity, and tight interworking between NR and E-UTRA.

The UE may refer to a user equipment. The user equipment may be referred to as such terms as "terminal", "mobile equipment (ME)", or "mobile station (MS)". In addition, the user equipment may be a portable device, such as a notebook, a mobile phone, a personal digital assistant (PDA), a smartphone, or a multimedia device. Alternatively, the user equipment may also be a non-portable device, such as a personal computer (PC) or a vehicle-mounted device.

The NEF may provide a means for securely exposing services and capabilities, provided by 3GPP network functions (e.g., third parties), for internal exposure/re-exposure, application functions, and edge computing. The NEF may receive information (e.g., based on exposed capability(s) of other NF(s)) from other NF(s). The NEF may store the received information as structured data by using a standardized interface to a data storage network function. The stored information may be re-exposed by the NEF entity to other NF entity (entities) and AF entity(entities) and used for other purposes such as analysis.

The NRF may support a service discovery function. The NRF may receive an NF discovery request from an NF instance and provide information on the discovered NF instance to the NF instance. In addition, the NRF may maintain available NF instances and services supported thereby.

Although FIG. 1 illustrates a reference model for a case where the UE accesses one DN by using one PDU session for the sake of descriptive convenience, the disclosure is not limited thereto and may include a case where the UE accesses one or more DNs by using one or more PDU sessions..

The UE may concurrently access two (i.e., local and central) data networks by using multiple PDU sessions. In this case, two or more SMFs may be selected for different PDU sessions. However, each SMF may have capability to control both the local UPF and central UPF in the PDU session.

The UE may concurrently access two (i.e., local and central) data networks provided within a single PDU session.

In 3GPP systems, conceptual links connecting NFs in the 5G system may be defined as "reference points". For example, reference points included in the 5G system 100 of FIG. 1 may be as follows.
- N1: A reference point between a UE and an AMF
- N2: A reference point between an (R)AN and an AMF
- N3: A reference point between an (R)AN and a UPF
- N4: A reference point between an SMF and a UPF
- N5: A reference point between a PCF and an AF
- N6: A reference point between a UPF and a DN
- N7: A reference point between an SMF and a PCF
- N8: A reference point between a UDM and an AMF
- N9: A reference point between two core UPFs
- N10: A reference point between a UDM and an SMF
- N11: A reference point between an AMF and an SMF
- N12: A reference point between an AMF and an AUSF
- N13: A reference point between a UDM and an AUSF
- N14: A reference point between two AMFs
- N15: A reference point between a PCF and an AMF for a non-roaming scenario, and a reference point between a PCF and an AMF in a visited network for a roaming scenario

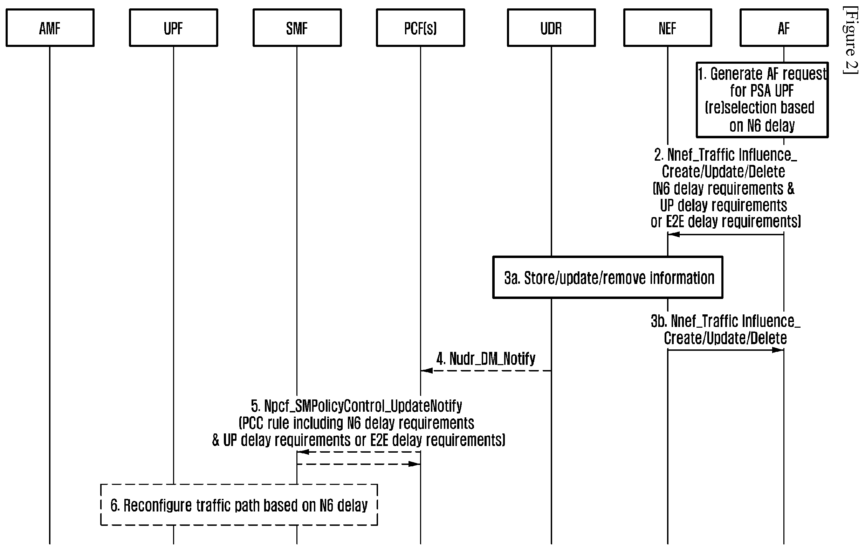

FIG. 2 illustrates an AF traffic influence request procedure including a data path delay information request according to an embodiment of the disclosure.

In Step 1, the AF may generate an AF request message (e.g., AF request message). The AF may include data path delay requirements, such as N6 delay time information required by an application program, or generate an AF request message based on data path delay requirements.

In step 2, the AF may transmit a message (e.g., an Nnef_Traffic Influence_Create and/or Update and/or Delete message) to the NEF. The message may include at least one of path delay requirements, such as AF influence data or N6 delay time requirement information. Specifically, the AF may transfer requirement information through the NEF such that, when selecting the PSA-UPF, the SMF determines whether to perform (re)selection in consideration of the N6 delay time (e.g., N6 delay) between the target DNAI and the PSA-UPF. The N6 data path delay requirements (e.g., N6 delay requirements) may include at least one of the following pieces of information.
(1) Maximum N6 data path delay time: the value of the maximum data path delay time may indicate the target delay time of the N6 data path targeted by the AF. In case that PSA-UPF (re)selection is possible in the SMF through an AF influence request, the data path delay time between the (re)selected PSA-UPF and the DN (EAS) may be a value equal to or less than the maximum data path delay value provided in the requirement information. The SMF may obtain a predicted delay time between the DN (EAS) and the PSA-UPF (re)selected as the UE moves. The SMF may use a value previously calculated with regard to the predicted delay time or may acquire the same by requesting the NWDAF. The SMF may identify whether the predicted delay time between the DN (EAS) and the PSA-UPF satisfies the requirements regarding the requested data path delay time, and determine whether to (re)select the PSA-UPF.
(2) Minimum delay time preference indicator of N6 data path: when the SMF selects a UPF or a PSA-UPF, the AF may preferentially select the UPF or PSA-UPF having a minimum N6 data path delay time with regard to the data path delay between the DN (EAS) and the UPF or PSA-UPF.

In case that the N6 data path delay requirements (e.g., N6 delay requirements) or the N6 delay time (e.g., N6 delay) is not provided by the AF to the network, thereby failing to directly measure the N6 data path, the AF may transmit (or transfer) information related to end-to-end (e2e) delay requirements (e.g., e2e delay requirement) for UPF selection or user plane data path delay time requirements to the SMF. Based on the received information (for example, at least one of the N6 delay time, the N6 data path delay requirements, or the e2e delay requirements), the SMF may determine whether to request part or all of the received information from the NWDAF.

The AF may transmit (or transfer) class information related to the user plane latency requirement for PSA-UPF (re)selection and N6 path delay time requirement to the network. For example, at least one piece of information from among ASSURED (0) or BEST EFFORT (1) may be included in at least one of N6 data path delay or user plane delay time related requirements. Alternatively, class information regarding at least one piece of information from among ASSURED (0) or BEST EFFORT (1) may be added inside data path delay time requirements related to UPF (re)selection provided by the AF.

According to the policies of the service provider, in case that the AF requests the SMF to perform UPF (re)selection, based on the e2e data path delay time requirement, e2e data path delay time requirements, including the maximum e2e data path delay time, an e2e data path minimum delay time preference indicator, and e2e data path delay time class information, may be transmitted (or transferred) together with N6 data path delay time requirements or while being added inside N6 data path delay time requirements.

In step 3a, the NEF may store and/or update and/or remove data path delay-related information, including N6 delay time requirement information, in the UDR.

In step 3b, the NEF may transmit a response message (for example, an Nnef_Traffic Influence_Create and/or Update and/or Delete message) to the AF.

In step 4, the UDR may transmit a notification (for example, Nudr_DM_Notify) message to the PCF that has subscribed to a data path delay-related information change notification service. A change in data path delay-related information may occur in this case.

In step 5, the PCF may transmit an update confirmation message (e.g., an Npcf_SMPolicyControl_UpdateNotify message) to the SMF. The message may include at least one piece of information related to data path delay requirements, including information related to AF influence traffic steering implementation control or N6 delay time requirement information. Specifically, the PCF may transmit a PCC rule including AF-influenced traffic steering implementation control information and traffic steering control information to the SMF. The AF influence traffic steering implementation control information may include at least one of the following pieces of information.
(1) Data network access identifier (DNAI) list
(2) Traffic steering policy identifier
(3) N6 traffic routing information
(4) AF subscription information regarding a UP change event
(4-1) Early or late notification
(4-2) Notification target address and notification correlation ID
(4-3) AF acknowledgment indicator

The traffic steering control information may include at least one of the following pieces of information.
(1) UE IP address retention indicator
(1-1) The SMF may determine whether to (re)select a PSA by using the UE IP address retention indicator.
(2) Shortest N6 data path delay preference indicator
(2-1) The SMF may select a PSA-UPF having the smallest N6 data path delay time by using the shortest N6 data path delay preference indicator.
(3) Target N6 delay requirement
(3-1) The SMF may determine whether to (re)select the PSA using the target N6 delay requirement.

In step 6, the SMF may perform an operation for PSA-UPF (re)selection (e.g., PSA UPF selection), based on N6 delay time requirement information. The SMF may perform PDU session's user plane (re)selection. In order to perform the user plane (re)selection, the SMF may perform at least one of the following operations. Configuration information for PSA-UPF (re)selection may mean traffic routing reconfiguration.
(1) At least one of addition, modification, or deletion of a UPF (for example, an uplink classifier UPF (ULCL UPF) or a branching point UPF)
(2) Newly assign IPv6 to a UE to which IPv6 (Internet Protocol Version 6) multi-homing has been applied
(3) Change to a UPF belonging to the target DNAI (target DNAI) provided together with the new traffic steering rule
(4) Subscribe the AMF to an area of interest notification service
(5) Select a PSA-UPF satisfying the requested data path delay time
(6) The SMF may consider PSA-UPF reselection in case that the UE has performed a handover (hereinafter referred to as HO) procedure, the UE has moved out of or into the AOI, or the UE has sent a registration request due to a location change.
(7) When determining PSA-UPF reselection, whether to reselect the PSA-UPF may be determined based on the requested data path delay time, and a PSA-UPF having the minimum data path delay time or a PSA-UPF satisfying the required delay time may be selected from multiple PSA-UPFs.

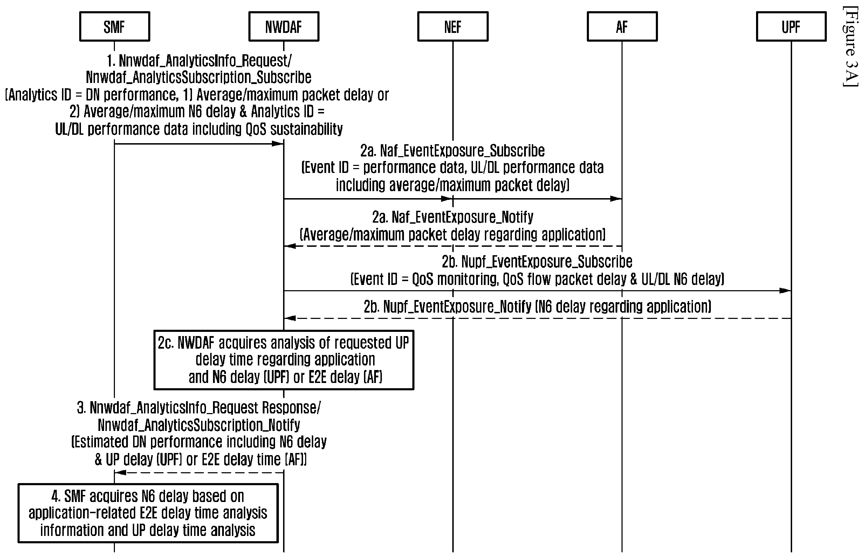

FIG. 3A illustrates a procedure of requesting N6 delay analysis information using a NWDAF according to an embodiment of the disclosure.

The NWDAF may request an N6 delay from the UPF, or may request end to end (e2e) delay (or latency) information from the AF. Based on the N6 delay collected from the UPF or the e2e delay information collected from the AF, the NWDAF may provide the SMF with network delay information predicted according to at least one of the UE's location, radio access technology (RAT) type, RAN node ID, and UPF ID.

According to an embodiment of the disclosure, the SMF may receive at least one piece of data path delay time requirement information from among N6 data path delay time requirement information for PSA-UPF (re)selection, user plane delay time requirement information, and e2e delay time requirement information from the AF. The SMF may determine whether to request a part or all of the data path delay time analysis information (e.g., analytics information) from the NWDAF, based on the data path delay time requirements. The NWDAF may transmit (or transfer) analyzed data path delay time information to the SMF, based on the request. The SMF may accordingly receive information regarding the actual delayed data path delay time or have the same transferred thereto.

The SMF may receive a request (e.g., e2e delay requirements or N6 data path delay time-related requirements) from the AF. The SMF may transmit (or transfer) information to the NWDAF based on the request.

In step 1, the SMF or other consumer NFs may transmit a message for requesting data path prediction information to the NWDAF. The request message may include information about at least one of the current UE location, RAT type, RAN node ID, UPF ID, SMF ID, and UPF service area.

According to an embodiment of the disclosure, in case that there is an e2e delay requirement, the SMF may request e2e delay measurement from the NWDAF. In order to measure e2e delay occurring when connecting to a candidate PSA-UPF with regard to each target DNAI, the SMF may transmit (or transfer) at least one of a request message (e.g., Nnwdaf_AnalyticsInfo_Request message) including network delay information (e.g., Analytics ID = DN Performance, UL/DL Performance data including average/maximum packet delay) or a subscription message (e.g., Nnwdaf_Analytics Subscription_Subscribe message) to the NWDAF.

According to an embodiment of the disclosure, in case that there is an N6 delay requirement (e.g., a requirement related to the N6 data path delay time), the SMF may request N6 delay time-related analysis information from the NWDAF. In order to measure the N6 delay generated when connecting to a candidate PSA-UPF with regard to each target DNAI, the SMF may transmit (or transfer) at least one of a request message (e.g., Nnwdaf_AnalyticsInfo_Request message) including network delay information (e.g., Analytics ID = QoS Sustainability, average/maximum N6 delay) or a subscription message (e.g., Nnwdaf_AnalyticsInfo_Request/ Nnwdaf_AnalyticsSubscription_Subscribe message) to the NWDAF.

In case of performing the PSA-UPF (re)selection operation based on the N6 delay time requirement, the SMF may request delay information predicted in the user plane, based on the N3 and N9 segments.

In step 2a, the NWDAF may transmit (or transfer) a subscription message (e.g., Naf_EventExposure_Subscribe message) for event subscription to the AF, in case that e2e delay measurement is possible with regard to each candidate PSA-UPF connected to the target DNAI. The subscription message may be transmitted to the AF through the NEF. The subscription message may include information such as event ID=performance data, UL/DL performance data including average/maximum packet delay, and the like.

The AF may transmit (or transfer) delay information (e.g., average and/or maximum packet delay for an application information) to the NWDAF through a notification message (e.g., Naf_EventExposure_Notify message) in case that e2e delay is measured with regard to each candidate PSA-UPF connected to target DNAIs.

In step 2b, the NWDAF may transmit (or transfer) an event subscription message (e.g., Nupf_EventExposure_Subscribe message) to the UPF to request measurement of the user plane's delay time and N6 delay with regard to each candidate PSA-UPF connected to target DNAIs. The event subscription message may include information such as Event ID = QoS Monitoring, QoS flow Packet Delay, UL/DL N6 delay, and UL/DL UP latency.

In case that N6 delay is measured with regard to each candidate PSA-UPF connected to target DNAIs, the UPF may transmit (or transfer) at least one of the average/maximum N6 delay for an application or user plane delay information between the candidate PSA-UPF and the UE, to the NWDAF through a notification message (e.g., Nupf_EventExposure_Notify message).

In step 2c, the NWDAF may analyze (or measure or calculate) at least one of N6 or user plane delay time information or e2e delay time information, based on requirement information received or transferred from the SMF. The N6 or user plane delay time information may be analyzed by calculating N6 delay time information measured for a specific time, based on information of the Candidate PSA-UPF connected to a specific DNAI in an average manner, or analyzed (or measured or calculated) based on the maximum N6 or user plane delay time information generated for a specific time in the specific candidate PSA-UPF.

In step 3, the NWDAF may transfer the analyzed N6 or user plane delay time information to the SMF through an Nnwdaf_AnalyticsInfo_Request response or Nnwdaf_AnalyticsSubscription_Notify message. The message may include information about at least one of estimated DN performance or QoS sustainability, including at least one of estimated DN performance N6 delay, UP delay (UPF), or e2e latency (AF).

In step 4, the SMF may perform PSA-UPF (re)selection, based on the N6 or user plane delay time information received from the NWDAF.

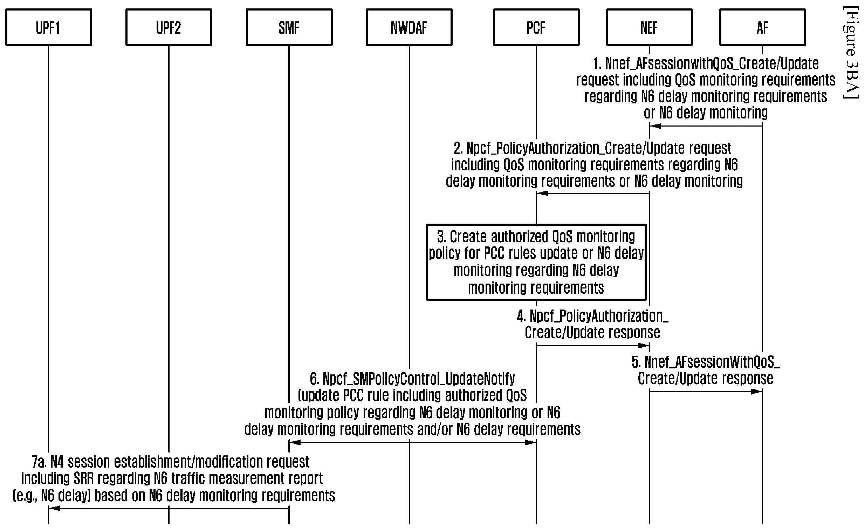

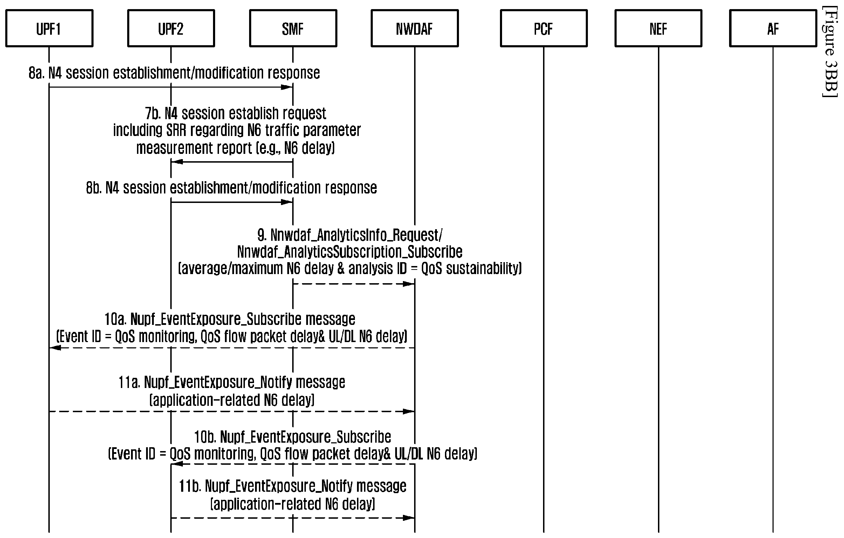

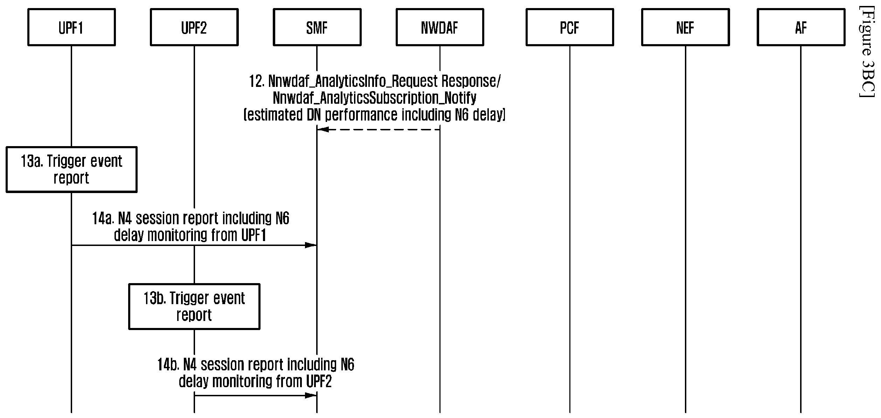

FIG. 3BA, FIG. 3BB, and FIG. 3BC are diagrams illustrating operations of determining to perform PSA-UPF (re)selection or EAS (re)selection based on N6 delay in an AF according to an embodiment of the disclosure, and operations of measuring and reporting N6 delay through a UPF.

The AF may transfer requirement information related to N6 delay measurement to the PCF. The PCF may transfer, to the SMF, a PCC rule update including an N6 delay measurement operation or a QoS monitoring policy. The UPF may perform QoS monitoring operations or N6 traffic parameter measurements for N6 traffic parameter measurements. The UPF may perform an operation of directly reporting a QoS monitoring reporting value to the SMF or reporting the same to the SMF through the NWDAF. Alternatively, the UPF may directly transfer the N6 delay measurement value to the AF through the NEF according to the request of the AF.

The AF may determine whether to perform PSA-UPF (re)selection or EAS (re)selection based on the N6 delay, according to the user's selection or the service provider's policy.

In step 1, the AF may transmit N6 delay monitoring requirement information including at least one of target N6 delay requirement information, QoS monitoring requirements for N6 delay monitoring, or N6 delay measurement requirements, based on determined matters, to the NEF. The NEF may accordingly transmit (or transfer) the N6 delay time monitoring requirement or N6 delay time measurement requirement information to the PCF. The N6 delay time monitoring requirement or N6 delay time measurement requirement information may be included in an AF session-related QoS requirement (e.g., AFsessionWithQoS or Nnef_AFsessionwithQoS_Create/Update request) message transferred from the AF to the NEF entity. The N6 delay time monitoring requirement or N6 delay time measurement requirement information may include at least one of an N6 delay support indication (e.g., N6 delay support indication) within N6 delay time monitoring or N6 delay time measurement support information (e.g., N6 delay assistance information), an N6 section protocol type-based N6 delay time calculation method (e.g., N6 delay calculation method), an N6 delay time reporting frequency (e.g., N6 delay reporting period), a jitter reporting condition including exceptional N6 traffic characteristics (e.g., N6 delay (jitter) reporting condition), or QoS monitoring-related information for N6 delay measurement at the PCF.

The N6 section protocol type-based N6 delay time calculation method (e.g., N6 delay calculation method) may include a method of using a timestamp in an RTP control protocol (RTCP) when using a real-time transport protocol (RTP) based service, and a method of using timestamp information in a header extension (HE) in RTP. Alternatively, the same may include an N6 delay time calculation method based on at least one of a one-way active measurement protocol (OWAMP, RFC 4656), a two-way active measurement protocol (TWAMP, RFC 5357), or a simple two-way active measurement protocol (STAMP, RFC 8762).

The QoS monitoring information may include information indicating a reporting frequency configured as "event trigger" or "periodic". In case that the N6 delay time monitoring requirement information includes information indicating a reporting frequency configured as "event trigger", the same may include threshold information regarding at least one of uplink, downlink, or round trip for determination, and may have a minimum waiting time value between reports. In case that the N6 delay time monitoring requirement information includes information indicating a reporting frequency configured as "periodic", a reporting period value may be configured, and the QoS monitoring parameter may be transferred to the UPF to perform an operation. Parameters for QoS monitoring may include information indicating a notification address related to reporting-related information, a notification correlation ID, or an indicator indicating whether an event is directly notified from the UPF to the AF (direct event notification indication).

In step 2, the NEF may transfer jitter support information (e.g., N6 delay assistance information) to be used in case of supporting the PSA-UPF (re)selection or EAS (re)selection operation, based on N6 delay, to the PCF entity through a policy authorization (e.g., PolicyAuthorization) message. The NEF may transfer the N6 delay support information received through a policy authorization creation message (e.g., Npcf_PolicyAuthorization_Create) request or a policy authorization update (e.g., Npcf_PolicyAuthorization_Update) request message to the PCF entity. In order to receive service-related reporting, i.e., to receive a jitter-related reporting event-related message generated by the PCF, the NEF may send an event reporting request to the PCF entity through a policy authorization subscription (e.g., Npcf_PolicyAuthorization_Subscribe) message. The NEF may directly receive the N6 delay information through the UPF, or may request the PCF to perform event reporting through the AF in connection with the N6 delay information transferred to the SMF. The NEF may define a new event ID (e.g., QoS monitoring based N6 delay monitoring reporting or N6 delay measurement reporting) related to jitter reporting based on the packet delay measured for receiving jitter support information-related reporting in the PCF for the request.

In step 3, the PCF may generate an authorized QoS monitoring policy for measuring N6 delay based on QoS monitoring or through traffic monitoring. Alternatively, PCC rule updates may be performed based on N6 delay monitoring requirements information. The updated PCC rule may include QoS monitoring parameter information or traffic monitoring information for N6 delay measurement.

In step 4 and step 5, the PCF may transmit (or transfer) a response message (e.g., Npcf_PolicyAuthorization_Create/Update response or Nnef_AFsessionWithQoS_Create/Update response) regarding the request message in step 1 and step 2 to the AF through the NEF.

In step 6, the PCF may transmit or transfer the updated PCC rules to the SMF through a session policy control update notification (e.g., Npcf_SMPolicyControl_UpdateNotify) request message.

In step 7a and step 7b, the SMF may transmit or transfer the PCC rules to the UPF through an N4 session establishment/modification request message.

The N4 session establishment/modification request message may include information for receiving a QoS monitoring execution and result report for N6 delay measurement (e.g., QoS monitoring report based on N6 delay monitoring requirements) or an N6 traffic parameter measurement report (e.g., N6 traffic parameter measurement report based on N6 delay measurement requirements). The SMF may transfer an N4 reporting procedure request message to the UPF through a session reporting rule (SRR) generated based on PCC rules updated so as to reflect parameter information related to N6 traffic parameter measurement or QoS monitoring for N6 delay measurement according to the AF request.

In order to measure N6 delay with regard to each candidate PSA-UPF connected to target DNAIs, the SMF may transmit or transfer an N4 session establishment/modification request message to each candidate PSA-UPF (e.g., UPF 1 and UPF 2). The SMF may transmit or transfer an SRR for N6 delay measurement to each UPF, and the SRR may be included in a request message and transmitted or transferred.

In steps 8a and 8b, each UPF (e.g., UPF1 and UPF2) may transmit or transfer a response message (e.g., N4 session establishment/modification response) regarding the request message in step 7 to the SMF.

In step 9, the SMF may transmit a message for requesting data path prediction information to the NWDAF. The request message may include information regarding at least one of the current UE location, the radio access technology (RAT) type, the RAN node ID, the UPF ID, the SMF ID, or the UPF service area. In case that there is an N6 delay requirement (for example, a requirement related to the N6 data path delay time), the SMF may request the NWDAF to provide N6 delay time-related analysis information. In order to measure the N6 delay occurring when connecting to a candidate PSA-UPF with regard to each target DNAI, the SMF may transmit (or transfer) at least one of a request message (e.g., Nnwdaf_AnalyticsInfo_Request message) including network delay information (e.g., Analytics ID = QoS Sustainability, average/maximum N6 delay) or a subscription message (e.g., Nnwdaf_AnalyticsInfo_Request/Nnwdaf_Analytics Subscription _Subscribe message) to the NWDAF.

In steps 10a and 10b, the NWDAF may transmit (or transfer) an event subscription message (e.g., Nupf_EventExposure_Subscribe message) for requesting measurement of the delay time of the user plane and N6 delay with regard to each candidate PSA-UPF connected to target DNAIs to at least one UPF (e.g., UPF1 and UPF2). The event subscription message may include information such as Event ID = QoS monitoring, QoS flow packet delay, UL/DL N6 delay, and UL/DL UP latency.

In steps 11a and 11b, in case that N6 delay is measured with regard to each candidate PSA-UPF connected to target DNAIs, each UPF may transmit (or transfer) at least one of the average/maximum N6 delay for an application or the user plane delay information between the candidate PSA-UPF and the UE to the NWDAF through a notification message (e.g., an Nupf_EventExposure_Notify message).

In step 12, the NWDAF may transfer the analyzed N6 or user plane delay time information to the SMF through a Nnwdaf_AnalyticsInfo_Request Response or Nnwdaf_AnalyticsSubscription_Notify message.

Alternatively, according to an embodiment of the disclosure, the SMF may directly receive the N6 delay-related QoS monitoring reporting or the traffic monitoring reporting value from the UPF.

The SMF may receive statistical analysis of N6 delay-related information of candidate PSA-UPFs connected to target DNAIs by requesting statistical analysis of N6 delay values monitored from the UPF through the NWDAF from step 9 to step 12, or may directly receive the same as a QoS monitoring operation or traffic monitoring operation-related event reporting result value from the UPF in steps 13 and 14. In case that the same is directly received as a QoS monitoring operation or traffic monitoring operation-related event reporting result value from the UPF, steps 9 to 12 may be omitted.

Through the above steps, the SMF may perform PSA-UPF (re)selection or EAS (re)selection operations in consideration of data path delay.

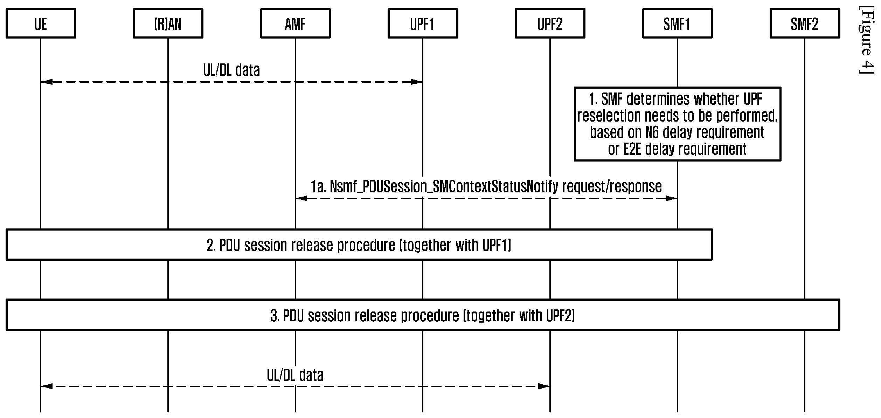

FIG. 4 is a diagram illustrating a PSA-UPF (re)selection determination procedure in consideration of data path delay according to an embodiment of the disclosure.

The UE may transmit/receive UL/DL data with UPF 1.

In Step 1, the SMF may perform a PSA-UPF (re)selection operation, based on at least one of N6 delay time requirements received from the AF and predicted N6 or user plane delay time information or e2e delay time information received from the NWDAF or UPF.

In step 1a, the SMF may transmit (or transfer) target DNAI information-related UPF selection information to the AMF through a request message (e.g., Nsmf_ PDUSession_SMContextStatusNotify request message). In response thereto, the AMF may transmit (or transfer) target DNAI information-related UPF selection information to the SMF through a response message (e.g., an Nsmf_PDUSession_SMContextStatusNotify response message). The target DNAI information may be used when selecting an SMF capable of controlling an UPF connected to the target DNAI when configuring a PDU session using the same data network name (DNN) and single network slice selection assistance information (S-NSSAI).

In step 2, the SMF may send a request for a PDU session release operation (e.g., a PDU session release procedure) related to UPF1 to the UE through the AMF. The request may be made through a transmission message (e.g., Namf_Communication_N1N2MessageTransfer message) including N1 SM information. A PDU session termination command (e.g., PDU session release command) message in N1 SM information may include the reasons related to PDU session reconfiguration to the same DN as the PDU session ID.

In step 3, the AMF may select an SMF based on target DNAI information. The UE may perform new PDU session establishment (e.g., a PDU session establishment procedure) related to UPF 2. The SMF may select a new UPF 2, based on the target DNAI information. The SMF may perform user plane (re)selection.

The UE may transmit/receive UL/DL data with the new UPF2.

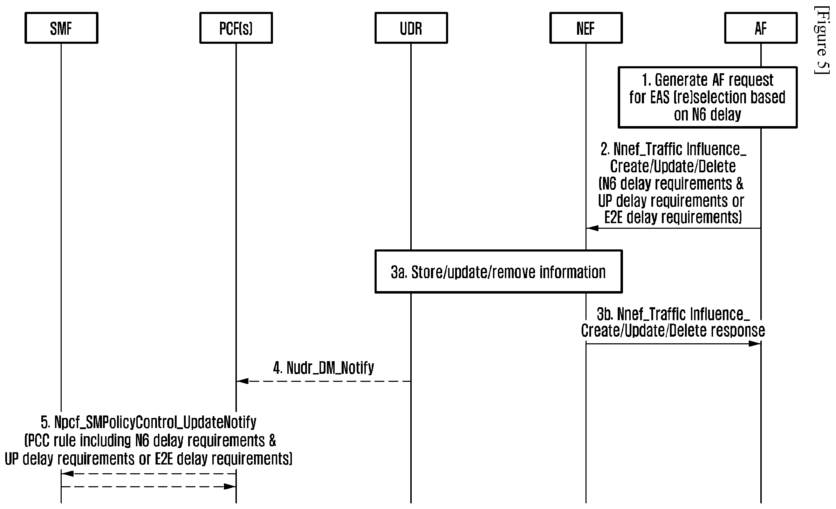

FIG. 5 is a diagram illustrating an AF traffic influence request procedure including a data path delay information request according to an embodiment of the disclosure.

In step 1, the AF may generate an AF request message. The AF may include data path delay requirements, such as N6 delay time information required by the application, or generate an EAS (re)selection related AF request message based on the data path delay requirements.

In step 2, the AF may transmit a message (for example, a Nnef_Traffic Influence_Create and/or Update and/or Delete message) to the NEF. The message may include at least one of AF influence data, N6 delay requirement information, or data path delay requirements. Specifically, the AF may transfer requirement information for determining whether to perform EAS (re)selection, in consideration of the N6 delay time between the target DNAI and the PSA-UPF, to at least one of the SMF, L-SMF, or edge application server discovery function (EASDF) through the NEF. The N6 data path delay requirements (for example, N6 delay requirements) may include at least one of the following pieces of information.
(1) Maximum N6 data path delay time: the value of the maximum data path delay time may indicate the target delay time of the N6 data path targeted by the AF. In case that DN (EAS) (re)selection is possible in the SMF through an AF influence request, the data path delay time between the (re)selected PSA-UPF and the DN (EAS) may be a value equal to or less than the maximum data path delay time value provided in the requirement information. The SMF may obtain a predicted delay time between the DN (EAS) and the PSA-UPF (re)selected as the UE moves. The SMF may use a value previously calculated with regard to the predicted delay time or may acquire the same by requesting the NWDAF. At least one of the SMF, L-SMF, or EASDF may identify whether the predicted delay time between the DN (EAS) and the PSA-UPF satisfies the requirements regarding the requested data path delay time, and determine whether to (re)select the EAS.
(2) Minimum delay time preference indicator of N6 data path: when at least one of the SMF, L-SMF, or EASDF selects an EAS, the AF may preferentially select an EAS having a minimum delay time with regard to the data path delay between the DN (EAS) and the PSA-UPF.

In case that the N6 data path delay requirements (e.g., N6 delay requirements) or the N6 delay time (e.g., N6 delay) is not provided by the AF to the network, thereby failing to directly measure the N6 data path, the AF may transmit (or transfer) information related to end-to-end (e2e) delay requirements (e.g., e2e delay requirement) for UPF selection or user plane data path delay time requirements to the SMF. Based on the received information (for example, at least one of the N6 delay time, the N6 data path delay requirements, or the e2e delay requirements), the SMF may determine whether to request part or all of the received information from the NWDAF.

The AF may transmit (or transfer) class information related to the user plane latency requirement for PSA-UPF (re)selection and N6 path delay time requirement to the network. For example, at least one piece of information from among ASSURED (0) or BEST EFFORT (1) may be included in at least one of N6 data path delay or user plane delay time related requirements. Alternatively, class information regarding at least one piece of information from among ASSURED (0) or BEST EFFORT (1) may be added inside data path delay time requirements related to UPF (re)selection provided by the AF.

According to the policies of the service provider, in case that the AF requests the SMF to perform UPF (re)selection, based on the e2e data path delay time requirement, e2e data path delay time requirements, including the maximum e2e data path delay time, an e2e data path minimum delay time preference indicator, and e2e data path delay time class information, may be transmitted (or transferred) together with N6 data path delay time requirements or while being added inside N6 data path delay time requirements.

In step 3a, the NEF may store and/or update and/or remove data path delay-related information, including N6 delay time requirement information, in the UDR.

In step 3b, the NEF may transmit a response message (for example, an Nnef_Traffic Influence_Create and/or Update and/or Delete message) to the AF.

In step 4, the UDR may transmit a notification (for example, Nudr_DM_Notify) message to the PCF that has subscribed to a data path delay-related information change notification service. A change in data path delay-related information may occur in this case.

In step 5, the PCF may transmit an update confirmation message (e.g., an Npcf_SMPolicyControl_UpdateNotify message) to the SMF. The message may include at least one piece of information related to data path delay requirements, including information related to AF influence traffic steering implementation control or N6 delay time requirement information. Specifically, the PCF may transmit a PCC rule including AF-influenced traffic steering implementation control information and traffic steering control information to the SMF. The AF influence traffic steering implementation control information may include at least one of the following pieces of information.
(1) Data network access identifier (DNAI) list
(2) Traffic steering policy identifier
(3) N6 traffic routing information
(4) AF subscription information regarding a UP change event
(4-1) Early or late notification
(4-2) Notification target address and notification correlation ID
(4-3) AF acknowledgment indicator

The traffic steering control information may include at least one of the following pieces of information.
(1) UE IP address retention indicator
(1-1) The SMF may determine whether to (re)select an EAS by using the UE IP address retention indicator.
(2) Shortest N6 data path delay preference indicator
(2-1) The SMF or L-SMF or EASDF may select an EAS having the smallest N6 data path delay time by using the shortest N6 data path delay preference indicator.
(3) Target N6 delay requirement
(3-1) The SMF, L-SMF, or EASDF may determine whether to (re)select an EAS by using the target N6 delay requirement.

The SMF may receive information of candidate EASs in the DNS response message (e.g., array of FQDN ranges and/or array of EAS IP address ranges) from the EASDF or have the information transferred therefrom. The SMF may perform EAS (re)selection, based on N6 delay requirement information received from or transferred from the AF. The SMF may be based on the domain name system (DNS) query information requested by the UE. The SMF may request a DNS handling rule from the EASDF. Alternatively, the SMF may request EAS (re)selection from the EASDF, based on the N6 delay requirement information in the BaselineDNSPattern. The SMF may receive N6 delay time information predicted with regard to a specific IP range from the network operator. Alternatively, the SMF may transmit (or transfer) N6 delay time requirement information to the EASDF, based on predicted N6 delay information received or transferred through the NWDAF.

The N6 delay time requirement information may be transmitted (or transferred) from the NEF to the SMF according to the configuration of the service provider and the network operator. At least one of step 4 or step 5 may be omitted. The requirement information for determining whether to perform EAS (re)selection in consideration of the N6 delay may be transferred while being included in EAS deployment Information, or may be transferred via an AF request message without using EAS deployment Information.

According to the configuration of the service provider and the network operator, at least one of the SMF or the L-SMF may select an appropriate EAS satisfying the service requirements, based on EAS information. This may be based on at least one of the N6 delay time or e2e delay time requirement information.

According to the configuration of the service provider and the network operator, the SMF may transmit (or transfer) at least one of an EAS selection operation indicator and N6 delay time requirement information for EAS selection inside baselineDNSPattern information or DNS message handling rule information to the EASDF. The SMF may thereby instruct the EASDF to perform EAS selection.

According to an embodiment of the disclosure, the AF may transmit (or transfer) information such as user plane delay time requirements and N6 delay time requirements or e2e delay time requirements to the SMF or the L-SMF through EAS deployment information or an AF request message. The AF may transmit (or transfer) the highest priority delay time requirement information to be considered during EAS selection to the SMF or L-SMF through the EAS deployment information or an AF request message.

According to an embodiment of the disclosure, the AF may also transmit (or transfer) IP range information of specific UE addresses or UE addresses within a specific area to the SMF or L-SMF. The AF may cause a specific UE or UEs in a specific area to perform EAS (re)selection based on service delay time requirements.

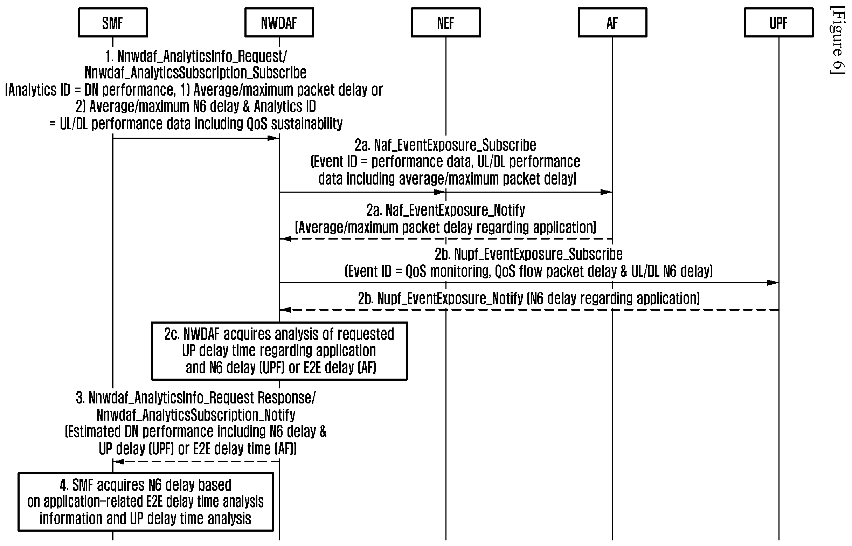

FIG. 6 illustrates a procedure of requesting N6 delay analysis information using a NWDAF according to an embodiment of the disclosure.

The NWDAF may request an N6 delay from the UPF, or may request e2e delay information from the AF. Based on the N6 delay collected from the UPF or the e2e delay information collected from the AF, the NWDAF may provide the SMF with network delay information predicted according to at least one of the UE's location, radio access technology (RAT) type, RAN node ID, and UPF ID.

In step 1, the SMF or other consumer NFs may transmit a message for requesting data path prediction information to the NWDAF. The request message may include information about at least one of the current UE location, RAT type, RAN node ID, UPF ID, SMF ID, and UPF service area.

According to an embodiment of the disclosure, in case that there is an e2e delay requirement, the SMF may request e2e delay measurement from the NWDAF. In order to measure e2e delay occurring when connecting to a candidate PSA-UPF with regard to each target DNAI, the SMF may transmit (or transfer) at least one of a request message (e.g., Nnwdaf_AnalyticsInfo_Request message) including network delay information (e.g., Analytics ID = DN Performance, UL/DL Performance data including average/maximum packet delay) or a subscription message (e.g., Nnwdaf_AnalyticsSubscription_Subscribe message) to the NWDAF.

According to an embodiment of the disclosure, in case that there is an N6 delay requirement (e.g., a requirement related to the N6 data path delay time), the SMF may request N6 delay time-related analysis information from the NWDAF. In order to measure the N6 delay generated when connecting to a candidate PSA-UPF with regard to each target DNAI, the SMF may transmit (or transfer) at least one of a request message (e.g., Nnwdaf_AnalyticsInfo_Request message) including network delay information (e.g., Analytics ID = QoS Sustainability, average/maximum N6 delay) or a subscription message (e.g., Nnwdaf_AnalyticsInfo_Request/ Nnwdaf_AnalyticsSubscription_Subscribe message) to the NWDAF.

In case of performing the PSA-UPF (re)selection operation based on the N6 delay time requirement, the SMF may request delay information predicted in the user plane, based on the N3 and N9 segments.

In step 2a, the NWDAF may transmit (or transfer) a subscription message (e.g., Naf_EventExposure_Subscribe message) for event subscription to the AF, in case that e2e delay measurement is possible with regard to each candidate PSA-UPF connected to the target DNAI. The subscription message may be transmitted to the AF through the NEF. The subscription message may include information such as event ID=performance data, UL/DL performance data including average/maximum packet delay, and the like.

The AF may transmit (or transfer) delay information (e.g., average and/or maximum packet delay for an application information) to the NWDAF through a notification message (e.g., Naf_EventExposure_Notify message) in case that e2e delay is measured with regard to each candidate PSA-UPF connected to target DNAIs.

In step 2b, the NWDAF may transmit (or transfer) an event subscription message (e.g., Nupf_EventExposure_Subscribe message) to the UPF to request measurement of the user plane's delay time and N6 delay with regard to each candidate PSA-UPF connected to target DNAIs. The event subscription message may include information such as Event ID = QoS Monitoring, QoS flow Packet Delay, UL/DL N6 delay, and the like.

In case that N6 delay is measured with regard to each candidate PSA-UPF connected to target DNAIs, the UPF may transmit (or transfer) at least one of the average/maximum N6 delay for an application or user plane delay information between the candidate PSA-UPF and the UE, to the NWDAF through a notification message (e.g., Nupf_EventExposure_Notify message).

In step 2c, the NWDAF may analyze (or measure or calculate) at least one of N6 or user plane delay time information or e2e delay time information, based on requirement information received or transferred from the SMF. The N6 or user plane delay time information may be analyzed by calculating N6 delay time information measured for a specific time, based on information of the Candidate PSA-UPF connected to a specific DNAI in an average manner, or analyzed (or measured or calculated) based on the maximum N6 or user plane delay time information generated for a specific time in the specific candidate PSA-UPF.

In step 3, the NWDAF may transfer the analyzed N6 or user plane delay time information to the SMF through an Nnwdaf_AnalyticsInfo_Request response or Nnwdaf_AnalyticsSubscription_Notify message. The message may include information about estimated DN performance including at least one of estimated DN performance N6 delay, UP delay (UPF), or e2e latency (AF).

In step 4, the SMF may perform EAS (re)selection based on N6 or user plane delay time information received from the NWDAF, or transmission (or transfer) of N6 delay time information to the EASDF for (re)selection.

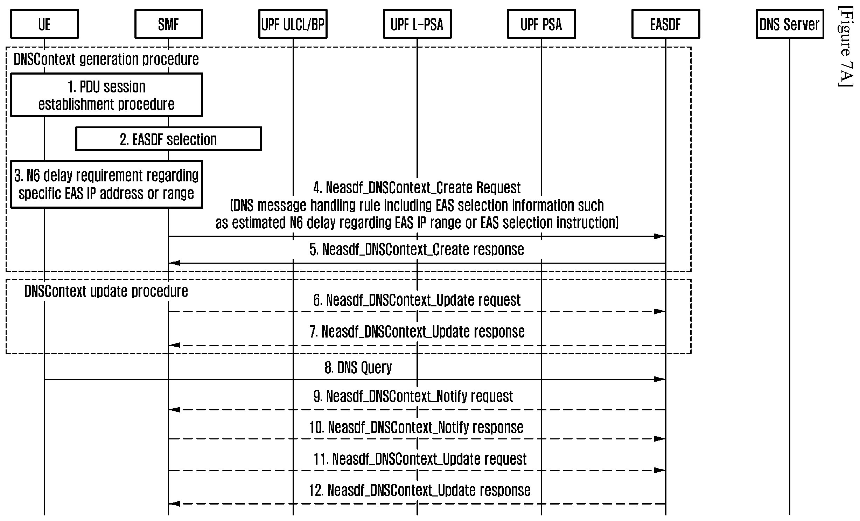

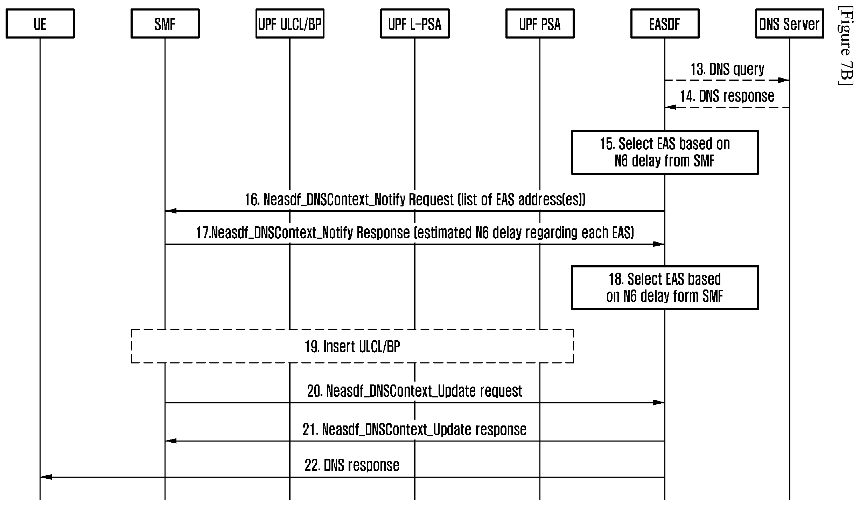

FIG. 7A and FIG. 7B are diagrams illustrating an EAS (re)selection determination procedure in consideration of a data path delay according to an embodiment of the disclosure.

In Step 1, the UE may transmit (or transfer) a PDU session establishment request message (e.g., a PDU session establishment procedure message) to the SMF. The SMF may identify whether the UE can find EAS information using the EASDF, based on subscription information of the UE received from the UDM.

In step 2, the SMF may select an EASDF. The SMF may select an EASDF as a DNS server related to a PDU session, based on the UE's subscription information. The SMF may indicate to the UE whether the use of the edge DNS client (EDC) function is allowed or whether the EDC function is required in the PDU session. The SMF may configure, according to the local configuration of the network operator, information between the EASDF and the DNS server in the DN to be transferred through the PSA UPF. The SMF may transfer N4 rules to the PSA UPF to configure DNS messages between the EASDF and the DN to be forwarded.

In step 3, in case that the SMF receives predicted N6 delay time information at the time of NWDAF or UPF selection, the SMF may determine to transfer at least one of N6 delay information-based EAS selection indicator information or predicted N6 delay information of EASs to the EASDF such that the EAS selection is performed in the EASDF. In case that the SMF fails to receive the predicted N6 delay time information, the SMF may transfer EAS selection indicator information to the EASDF. The predicted N6 delay time information may be related to EASs and may be based on EAS deployment information or AF requirements. In addition, the N6 delay time information may be intended for EAS selection. In addition, the N6 delay time information may be predicted based on the EASDF and PSA information.

In step 4, the SMF may transmit (or transfer) a request message (for example, Neasdf_DNSContext_Create Request message) to the selected EASDF. The request message may include a UE IP address, a subscription permanent identifier (SUPI), a DNN, a notification endpoint, and DNS message handling rules. The EASDF may generate a PDU session-related DNS context, and may store at least one of a UE IP address, a SUPI, or the notification endpoint. The DNS message handling rule may be configured before a DNS query message is received by the EASDF, or as a result of DNS query reporting. The SMF may transmit (or transfer), to the EASDF, a DNS message handling rule including an EAS selection operation indicator (for example, EAS selection information or EAS selection indication) and N6 delay requirement information, in consideration of the N6 delay time in accordance with the policies of the network operator and service provider, while being included in a DNS message handling rule. The N6 delay time requirement information may include information about N6 delay measured for the EAS IP range.

The SMF may transmit (or transfer) an EAS selection operation indicator and N6 delay requirement information, based on the N6 delay time, to the EASDF through a BaselineDNSPattern message (e.g., Neasdf_BaselineDNSPattern_Create and/or Update and/or Delete message) according to the policies of the network operator and the service provider. In case that the SMF separately transfers the EAS selection operation indicator and the N6 delay requirement information in consideration of the N6 delay time to the EASDF through a BaselineDNSPattern service operation, the SMF may not include at least one of the separate N6 delay requirement information or the EAS selection operation indicator information in the Neasdf_DNSContext_Create Request message.

In step 5, the EASDF may transmit (or transfer) a response message (e.g., a Neasdf_DNSContext_Create response message) to the SMF. The EASDF may inform the SMF that the DNS context has been successfully generated inside the EASDF through a response message.

The PDU session establishment accept message may include the EASDF's IP address information. The UE may configure the EASDF as a DNS server address of the PDU session.

The procedure for generating the DNS context (e.g., DNS context creation procedure) may include at least one of steps 1, 2, 3, 4, or 5 above.

In Step 6, the SMF may transmit (or transfer) an update request message (e.g., a Neasdf_DNSContext_Update Request message) to the EASDF. The update request message may include an EASDF context ID, or a DNS message handling rule, and the like. The update may be triggered by UE mobility. For example, the update may be triggered by at least one of the insertion and/or removal of the local PSA in case that the UE moves to a new location, the EASDF reports a DNS query including a specific fully qualified domain name (FQDN), a rule for processing a DNS message from the UE is updated, or update to new policy and charging control (PCC) rule information is made.

In step 7, the EASDF may transmit (or transfer) a response message (e.g., Neasdf_DNSContext_Update response message) to the SMF. The response message may include response information regarding the DNS context update operation.

The DNS context update procedure may include at least one of step 6 or step 7.

In step 8, the UE may transmit (or transfer) a DNS query message to the EASDF.

In case that the DNS query message transmitted by the UE matches the DNS message detection template in the DNS message handling rule, the EASDF may transmit (or transfer) the DNS message ID and the DNS message report to the SMF through a request message (e.g., Neasdf_DNSContext_Notify request message) in step 9.

In step 10, the SMF may transmit (or transfer) a response message (e.g., Neasdf_DNSContext_Notify response message) to the EASDF. The SMF may transmit (or transfer) a response message including response information regarding the DNS message report.

In case that there is a need to update the DNS message handling rule related to the FQDN in the DNS message report, the SMF may transmit (or transfer) an updated DNS message handling rule to the EASDF through a request message (e.g., Neasdf_DNSContext_Update request message) in step 11. In case that there is no update, the EASDF may transmit (or transfer) the DNS query message to at least one of the preconfigured DNS server or resolver.

In case that there is a separate DNS message handling rule update request, the EASDF may transmit (or transfer) a response message (e.g., Neasdf_DNSContext_Update response message) to the SMF in step 12. The response message may include response information regarding the update.

In case that the DNS query message transmitted by the UE does not match the FQDN information of the DNS message detection template information in the DNS handling rule, the EASDF may transmit (or transfer) a DNS query message to at least one of a preconfigured DNS server or a resolver in step 13. For example, the UE may transmit a DNS query for requesting the IP address regarding the fully qualified domain name (FQDN) of the EAS to be connected to a preconfigured DNS server. The DNS server may return the IP address of the EAS that is closest to the UE among the EASs corresponding to the FQDN to the UE. The DNS server may estimate the UE's location through at least one of the source IP address of the DNS query or an extension mechanisms for DNS (EDNS) client subnet (ECS) option.

In step 14, the EASDF may receive a response message (e.g., a DNS response message) including EAS IP address information from the DNS server. The EASDF may transfer the DNS response to the UE.

In step 15, the EASDF may select an EAS, based on EAS address information in the DNS query response message. In case that the EASDF has not received a predicted EAS-specific N6 delay time value, the EASDF may not perform step 15. The EASDF that has not received a predicted EAS-specific N6 delay time value may transmit (or transfer) the IP addresses of the EASs in the DNS query response information to the SMF, and may receive a N6 delay time value measured for each EAS from the SMF (or may have the same transferred thereto).

In case that the EAS IP address or FQDN information in the DNS response message matches the DNS message detection template, the EASDF may transmit (or transfer) the EAS information to the SMF through DNS message reporting. In case that multiple EAS IP addresses have been received from the DNS server, the EASDF may include a list of the EAS IP addresses in the DNS message reporting. According to the DNS message handling rule, the EASDF may buffer the DNS response without transmitting (or transferring) the DNS response to the UE. In case that there is an indication regarding reporting or transferring from the SMF, the EASDF may transmit (or transfer) the DNS response message to the UE. In case that one-time reporting control information is configured in the EASDF, the EASDF may report information regarding a DNS response matching the DNS message detection template to the SMF only once. The EASDF that has not received the predicted EAS-specific N6 delay time value may transmit (or transfer) DNS message reporting including the IP addresses, FQDN information, and DNS message IDs of EASs for requesting the EAS-specific measured N6 delay time values to the SMF.

In step 17, the SMF may transmit (or transfer) a response message (for example, a Neasdf_DNSContext_Notify response message or response reporting) regarding the DNS response reporting to the EASDF. The response message may include an N6 delay time value measured for each EAS received by the SMF from at least one of the NWDAF or the UPF.

The SMF may identify DNAI information mapped to EAS-related information (e.g., IP address, FQDN information, etc.) in DNS response reporting, based on the information in the EAS deployment information (EDI) received or transferred through the AF or the like. The SMF may transfer requirement information for N6 delay time measurement, including the DNAI information, to the NWDAF, thereby requesting the NWDAF to analyze (or measure) the N6 delay time value of the EAS connected to the candidate UPFs.

In step 18, the EASDF may select an EAS, based on the N6 delay time requirement. The N6 delay time requirement may be received or transferred from the SMF, based on the measured EAS IP address-specific N6 delay information.

In step 19, the SMF may select and/or insert at least one of an uplink classifier (ULCL), a branching point (BP), or a local PSA. The SMF may receive EAS information from the EASDF through a notification message (e.g., Neasdf_DNSContext_Notify message). The EASDF may select a DNAI, based on service experience or DN performance analytics for an edge application. The SMF may determine N6 traffic routing information regarding the DNAI, based on N6 traffic routing information regarding the DNAI included in the EAS deployment information. The SMF may configure a local PSA UPF including a transfer, based on the N6 traffic routing information. The traffic detection rules and traffic routing rules may be determined by the SMF according to at least one of the DNAI-specific IP address ranges included in the EAS deployment information, the PCC rules received from the PCF, or preconfigured information.

In step 20, the SMF may transmit or transfer a request message (e.g., Neasdf_DNSContext_Update request message) to the EASDF. The request message may include DNS message control rule information. The DNS message control rule information may include at least one of "Send the buffered DNS response(s) message to UE" control operation information and EAS information selected based on the N6 delay. In case that the EAS selection operation based on the N6 requirements is performed in the EASDF according to the configuration of the network or the service provider, the message transmitted (or transferred) by the SMF may not include separate EAS information. The SMF may transmit (or transfer) at least one of the DNS message ID transferred from the EASDF and DNS message control rule information including "send the buffered DNS response(s) message to UE" control information to the EASDF.

In step 21, the EASDF may transmit (or transfer) a response message (e.g., a Neasdf_DNSContext_Update response message) to the SMF. The response message may include response information related to a DNS message ID.

In step 22, the EASDF may transmit (or transfer) a DNS response message to the UE. The response message may include the IP information of the EAS selected based on the N6 delay.

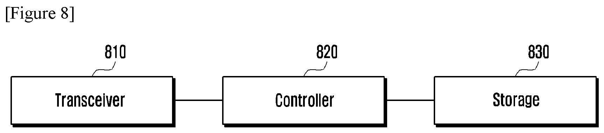

FIG. 8 illustrates a structure of a UE according to an embodiment of the disclosure.

Referring to FIG. 8, the UE may include a transceiver 810, a controller 820, and a storage 830. As used herein, the controller may be defined as a circuit, an application specific integrated circuit, or at least one processor.

The transceiver 810 may transmit/receive signals with other network entities. The transceiver 810 may receive, for example, system information, synchronization signals, or reference signals from base stations.

The controller 820 may control the overall operation of the UE according to the embodiments proposed in the disclosure. For example, the controller 820 may control signal flows between the respective blocks so that the UE transmits a re-INVITE message for an application data channel connection to an IMS AS according to embodiments of the disclosure.

The storage 830 may store at least one of information transmitted/received through the transceiver 810 and information generated through the controller 820. For example, the storage 830 may store information for a video or audio session bootstrap data channel connection.

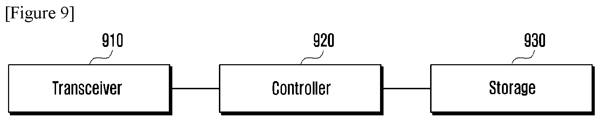

FIG. 9 illustrates a network entity according to an embodiment of the disclosure.

The network entity illustrated in FIG. 9 may be configured as one of various types of network entities set forth herein, and may be configured as, for example, an AMF, an SMF, a PCF, a UPF, an AUSF, a UDM, an AF, an NSSF, an NRF, an NEF, an NWDAF, etc.

Referring to FIG. 9, the network entity may include a transceiver 910, a controller 920, and a storage 930. As used herein, the controller may be defined as a circuit, an application specific integrated circuit, or at least one processor.

The transceiver 910 may transmit/receive signals with other network entities. For example, the transceiver 910 may receive request messages from various information from UEs, base stations. or other network entities.

The controller 920 may control the overall operation of the network entity according to the embodiments proposed in the disclosure. For example, the controller 920 may cause the network entity to perform channel establishment-related policy determination according to the embodiments set forth herein.

The storage 930 may store at least one of information transmitted/received through the transceiver 910 and information generated through the controller 920. For example, the storage 930 may store media control-related information.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. In addition, the above respective embodiments may be employed in combination, as necessary. For example, the respective embodiments of the disclosure may be at least partially combined with each other to be operated by a base station, a terminal, or a specific network entity.

Methods disclosed in the claims or methods according to the embodiments described in the specification of the disclosure may be implemented by hardware, software, or a combination of hardware and software.

When implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a device for performing embodiments of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural, and therefore, either an element expressed in the plural may also include a single element or an element expressed in the singular may also include multiple elements

It should be noted that the configuration diagrams, illustrative diagrams of control/data signal transmission methods, illustrative diagrams of operation procedures, and structural diagrams as illustrated in FIG. 1 to FIG. 9 are not intended to limit the scope of protection of the disclosure. That is, all the constituent units, entities, or operation steps shown in FIG. 1 to FIG. 8 should not be construed as essential elements for implementing the disclosure, and even when including only some of the elements, the disclosure may be implemented without impairing the true nature of the disclosure.

The above-described operations of a base station or terminal may be implemented by providing any unit of the base station or terminal device with a memory device storing corresponding program codes. That is, a controller of the base station or terminal device may perform the above-described operations by reading and executing the program codes stored in the memory device by means of a processor or central processing unit (CPU).

Various units and modules of a network entity, a base station device, or a terminal device may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a session management function (SMF) entity in a communication system, the method comprising:
receiving, from a policy control function (PCF) entity, a notify message including a policy and charging control (PCC) rule for measurement regarding N6 delay, the measurement regarding the N6 delay being measurement regarding a connection between at least one user plane function (UPF) entity and a measurement endpoint of a data network (DN);
receiving, from an application function (AF) entity, edge application server (EAS) deployment information (EDI) for the measurement regarding the N6 delay; and
transmitting a request message for the measurement regarding the N6 delay to the at least one UPF entity.

2. The method of claim 1, further comprising:
receiving, from the at least one UPF entity, a reporting message including a result regarding the measurement regarding the N6 delay, in response to the request message; and
selecting a UPF entity from among the at least one UPF entity, based on the result regarding the measurement.

3. The method of claim 2, further comprising:
performing EAS re-discovery, based on the result regarding the measurement.

4. The method of claim 1, wherein the measurement regarding the N6 delay is performed based on at least one of a measurement protocol or a reporting period,
wherein the measurement protocol includes at least one of a two-way active measurement protocol (TWAMP), a one-way active measurement protocol (OWAMP), or a simple two-way active measurement protocol (STAMP), and
wherein the EDI is related to at least one of domain name system (DNS) server information, EAS Internet protocol (IP) information, fully qualified domain name (FQDN) information, or data network access identifier (DNAI) information.

5. A method performed by a user plane function (UPF) entity in a communication system, the method comprising:
receiving a request message for measurement regarding N6 delay from a session management function (SMF) entity, the measurement regarding the N6 delay being measurement regarding a connection between at least one UPF entity and a measurement endpoint of a data network (DN);
performing the measurement regarding the N6 delay, based on the request message; and
transmitting, to the SMF entity, a reporting message including a result regarding the measurement regarding the N6 delay, in response to the request message,
wherein the measurement regarding the N6 delay is related to a notify message including a policy and charging control (PCC) rule received from a policy control function (PCF) entity and edge application server (EAS) deployment information (EDI) received from an application function (AF) entity.

6. The method of claim 5, wherein, based on the result regarding the measurement, a UPF entity from among the at least one UPF entity is selected.

7. The method of claim 6, wherein, based on the result regarding the measurement, the EAS is re-discovered.

8. The method of claim 5, wherein the measurement regarding the N6 delay is performed based on at least one of a measurement protocol or a reporting period,
wherein the measurement protocol includes at least one of a two-way active measurement protocol (TWAMP), a one-way active measurement protocol (OWAMP), or a simple two-way active measurement protocol (STAMP), and
wherein the EDI is related to at least one of domain name system (DNS) server information, EAS Internet protocol (IP) information, fully qualified domain name (FQDN) information, or data network access identifier (DNAI) information.

9. A session management function (SMF) entity in a communication system, the SMF entity comprising:
a transceiver; and
a controller coupled to the transceiver,
wherein the controller is configured to:
receive, from a policy control function (PCF) entity, a notify message including a policy and charging control (PCC) rule for measurement regarding N6 delay, the measurement regarding the N6 delay being measurement regarding a connection between at least one user plane function (UPF) entity and a measurement endpoint of a data network (DN);
receive, from an application function (AF) entity, edge application server (EAS) deployment information (EDI) for the measurement regarding the N6 delay; and
transmit a request message for the measurement regarding the N6 delay to the at least one UPF entity.

10. The SMF entity of claim 9, wherein the controller is configured to:
receive, from the at least one UPF entity, a reporting message including a result regarding the measurement regarding the N6 delay, in response to the request message; and
select a UPF entity from among the at least one UPF entity, based on the result regarding the measurement.

11. The SMF entity of claim 10, wherein the controller is configured to perform EAS re-discovery, based on the result regarding the measurement.

12. The SMF entity of claim 9, wherein the measurement regarding the N6 delay is performed based on at least one of a measurement protocol or a reporting period,
wherein the measurement protocol includes at least one of a two-way active measurement protocol (TWAMP), a one-way active measurement protocol (OWAMP), or a simple two-way active measurement protocol (STAMP), and
wherein the EDI is related to at least one of domain name system (DNS) server information, EAS Internet protocol (IP) information, fully qualified domain name (FQDN) information, or data network access identifier (DNAI) information.

13. A user plane function (UPF) entity in a communication system, the UPF entity comprising:
a transceiver; and
a controller coupled to the transceiver,
wherein the controller is configured to:
receive a request message for measurement regarding N6 delay from a session management function (SMF) entity, the measurement regarding the N6 delay being measurement regarding a connection between at least one UPF entity and a measurement endpoint of a data network (DN);
perform the measurement regarding the N6 delay, based on the request message; and
transmit, to the SMF entity, a reporting message including a result regarding the measurement regarding the N6 delay, in response to the request message, and
wherein the measurement regarding the N6 delay is related to a notify message including a policy and charging control (PCC) rule received from a policy control function (PCF) entity and edge application server (EAS) deployment information (EDI) received from an application function (AF) entity.

14. The UPF entity of claim 13, wherein, based on the result regarding the measurement, a UPF entity from among the at least one UPF entity is selected, and
wherein, based on the result regarding the measurement, the EAS is re-discovered.

15. The UPF entity of claim 13, wherein the measurement regarding the N6 delay is performed based on at least one of a measurement protocol or a reporting period,
wherein the measurement protocol includes at least one of a two-way active measurement protocol (TWAMP), a one-way active measurement protocol (OWAMP), or a simple two-way active measurement protocol (STAMP), and
wherein the EDI is related to at least one of domain name system (DNS) server information, EAS Internet protocol (IP) information, fully qualified domain name (FQDN) information, or data network access identifier (DNAI) information.
